# EUROPEAN PATENT SPECIFICATION

(11) **EP 3 464 140 B1**
(45) Date of publication and mention of the grant of the patent: **07.07.2021**
(21) Application number: 17728470.0
(22) Date of filing: 29.05.2017
(51) Int. Cl.: B65H 3/62, B65H 15/02, B65H 3/48

(54) **PILE PREPARATION UNIT**
STAPELHERSTELLUNGSEINHEIT
UNITÉ DE PRÉPARATION DE PILES

(30) Priority: 30.05.2016 DK 201670376
(43) Date of publication of application: 10.04.2019
(73) Proprietor: Schur Technology A/S, 8700 Horsens (DK)
(72) Inventor: ANDERSSON, Jonas, 575 36 Eksjö (SE); GRANDIN, Niklas, 571 72 Ormaryd (SE); GUSTAVSSON, Stefan, 578 33 Aneby (SE)
(74) Representative: Patrade A/S
(86) International application number: PCT/EP2017/062863
(87) International publication number: WO 2017/207474

(56) References cited:
- EP-A1- 0 931 741
- JP-A- 2010 013 230
- US-A- 5 295 309

## Description

### Field of the Invention

The present invention relates to a pile preparation unit (PPU) for preparing a pile of sheets. The pile of sheets has a first end, which first end is optionally standing on a pallet, and opposite a free second end, a front edge side and a side edge side. The PPU comprises a rotation base configured for standing on a floor and for supporting a rotation unit, configured with an infeed side for receiving a pile of sheets in a feed direction. The pile of sheets may optionally be on a pallet. The rotation unit has a rotation unit frame with a rotation unit frame cross section. The rotation unit is configured with an edge side support unit, configured with an edge side support face to support an edge side of the pile of sheets when the pile of sheets is in a rotated position to lean on the edge side support face.

### Background of the Invention

Preparation of a pile of sheets for processing, such as paper sheets for printing, such as printing, is still a complex task that requires manual intervention at different stages of the preparation. Sheets of different types may require individual handling or attention.

Each pile of sheets requires individual manual operation and typically preparation is with different time for same products. Finally a skilled operator is required. A pile preparation unit according to the prior art and a related method is disclosed in EP 0 931 741 A1.

### Object of the Invention

It is an object of the present invention to overcome one or more of the before mentioned limitations. It is a further object to increase the automated level of preparing a pile of sheets for processing.

### Description of the Invention

An object is achieved by a pile preparation unit (PPU) for preparing a pile of sheets. The pile of sheets has a first end, which first end is optionally standing on a pallet, and opposite a free second end, a front edge side and a side edge side.

The PPU comprises a rotation base configured for standing on a floor and for supporting a rotation unit, configured with an infeed side for receiving a pile of sheets in a feed direction. The pile of sheets may optionally be on a pallet.

The rotation unit has a rotation unit frame with a rotation unit frame cross section.

The rotation unit is configured with an edge side support unit, configured with an edge side support face to support an edge side of the pile of sheets when the pile of sheets is in a rotated position to lean on the edge side support face.

The rotation unit has a lift unit configured to engage a lift plate to the free second end of the pile of sheets in the pile preparation position and to lift a pile of sheets.

The rotation unit is configured with a pile support unit, configured with a pile support face for engaging and supporting the front edge side of the pile of sheets.

In an aspect of the pile preparation unit (PPU), the rotation unit frame comprises two guides shifted in the feed direction relative to each other and each fixed to the rotation base and guiding a belt driven by a rotation unit drive system in the rotation base.

The belt may be a timing belt. The belt may be a chain.

It is understood that the pile of sheets does not form part of the invention. However for clarity and understanding, the pile of sheets is an object to which the pile preparation unit is directed to. A person skilled in the art will thus appreciate modifications of the PPU according to variations in a size or shape of a pile of sheets.

Thus the PPU provides an effective and automated apparatus for preparing a pile of sheets for processing. The disclosed PPU may handle piles of sheets of a multiplicity of types of pile-shapes and -sizes as well as a multiplicity of sheet types and weights.

The disclosed PPU saves time, the PPU allows for a quick setup for a new material in a pile of sheets. Piles prepared by the PPU will be more identical and PPU will provide a substantially constant throughput. The PPU may be fully integrated in an ERP system.

The rotation unit may rotate about a rotational axis, which axis may the feed direction.

The rotation unit may be configured to rotate a conveyor about the feed direction. The conveyor may be configured to transport a pallet with a pile of sheets from the infeed side in the feed direction to a pile preparation position. In an aspect the belts encircle the conveyor.

In an aspect the rotation unit is further configured with an edge side support unit, configured with an edge side support face to support an edge side of the pile of sheets when the pile of sheets is in a rotated position to lean on the edge side support face.

In an aspect the edge side support unit is pivotally arranged to tilt the edge side support unit when rotated about 90 degrees.

In an aspect the edge side support unit is further configured with a blower unit, configured to blow into the edge side of the pile of sheets from the edge side support face.

In an aspect the blower unit has air mouthpieces installed in blower conveyor belts configured for movements along a pile of sheets. The airing may be in the direction between the first end and the second end.

In an aspect the edge side support unit is further configured with one or more vibration units, configured to vibrate the edge side support face.

An object of the invention is achieved by a method of preparing a pile of sheets for processing, the pile of sheets having a first end optionally standing on a pallet and opposite a free second end, a front edge side and a side edge side.

The method comprises one or more of the following acts.

There is an act of preparing a PPU for receiving a pile of sheets for free transport to a pile preparation position.

There is an act of placing the pile of sheets at the pile preparation position, with the side edge side of the pile of sheets in the vicinity of an edge side support face of the edge support unit.

There is an act of engaging a pile support face of a pile support unit on the front edge side of the pile of sheets.

There is an act of rotating the pile of sheets to about 90 degrees for the edge side support face to support the side edge side of the pile of sheets.

There is acts that are repeated as requires and as follows.

There is an act of tilting the pile of sheets towards the pile support face.

There is an act of blowing the pile of sheets, where blowing is into the pile of sheets from the edge side support face.

There may be an act of vibrating the edge side support face and then the pile of sheets.

The act of blowing may be performed whilst moving air mouthpieces in the first end - second end directions ("top-down"-direction) of the pile of sheets.

There may be one or more acts of:
- Storing any previously performed set of acts
- Editing any previously performed set of acts
- Retrieving any previously performed set of acts; and
- Executing any previously performed set of acts.

The acts may be stored in a computer system and acts may collectively be stored as a "recipe" or a set of instructions to be performed by the PPU thereby allowing an otherwise "unskilled" person to operate the PPU to perform the acts.

The acts may allow for a fully automated pile preparation process, which may be integrated in a higher level plant process such as a printing process.

The invention can advantageously be combined with one or more of the following five independent inventions and the following five inventions can be combined with each other.

A first independent invention may be a conveyor with a belt for transporting an object between a first end and a second end of the conveyor. The conveyor may have a first belt drive transmission at the first end and a second belt drive transmission at the second end. The drive transmission may be configured as freewheel-types in respective directions.

The conveyor may have an intermediate transmission system arranged between the first end and the second end and having a first communication with the first belt drive transmission and having a second communication with the second belt drive transmission.

The conveyor may have a drive system in communication with a drive shaft in the intermediate transmission system, and may be configured to turn the drive shaft bidirectional in a first drive direction and a second drive direction.

The conveyor may be configured with the drive shaft having an intermediate communication with the first communication through a first intermediate transmission and the second communication through a second intermediate transmission.

The disclosed conveyor is compact and low weight, which allows for installation with in industrial process equipment. The conveyer may be adapted to be rotated in a pile preparation unit. The conveyor is reversible, and has a single centre positioned drive system. The conveyor may transport heavy loads and with an equal load and equal torque in the forward and reverse directions. The conveyor eliminates or counteracts any "push" forces on the belt.

In an aspect, the first intermediate transmission is configured for engagement and force transmission at a first engagement position in the first drive direction and a second engagement position in the second drive direction and in-between having a first path of un-engagement.

In an aspect, the second intermediate transmission is configured for engagement and force transmission at a first engagement position in the first drive direction and a second engagement position in the second drive direction and in-between having a second path of un-engagement.

In an aspect, the intermediate communication is arranged so that for the first drive direction, the first intermediate transmission is enabled for engagement at the first engagement position whilst the second intermediate transmission is in the second path of un-engagement. For the same aspect and for the second drive direction, the second intermediate transmission is enabled for engagement at the second engagement position whilst the first intermediate transmission is in the first path of un-engagement.

Thereby is achieved that the conveyor for the first drive direction, engages the first belt drive transmission for a first pull of the belt towards the first end whilst free-wheeling the second belt drive transmission. For the second drive direction it is achieved that the second belt drive transmission engages for a second pull of the belt towards the second end whilst free-wheeling the first belt drive transmission.

Such conveyor will pull towards the respective first and second end whilst releasing tension in respective opposite ends. By pull is understood that traction power or a traction force is applied from the respective first or second end of the conveyor. This will allow the conveyor to transport heavy objects back and forth without building-up tension. A further advantage is that tensions are released during use situations of "asymmetric load" where a heavy object is transported in one direction, substantially offloaded and then reversed as a light object. A further advantage is that the configuration results in a flat structure of the conveyor in a direction transverse to the face of the belt for engaging with the object.

In an aspect the intermediate communication comprises an intermediate chain engaging with a drive cogwheel on the driveshaft, a first intermediate drive cogwheel on the first intermediate transmission and a second intermediate drive cogwheel on the second intermediate transmission. In an aspect the first and second communications comprise respective first and second communication chains engaging respective first and second belt cogwheels in the respective first and second belt drive transmissions with respective first and second communication cogwheels in the respective first and second intermediate transmissions. In an aspect the respective first and second intermediate transmissions each has a respective first and second intermediate drive cogwheel and a respective first and second communication cogwheel sharing respective common first and second intermediate shafts. Furthermore, the respective first and second intermediate transmission may be configured with engagement means to transmit force at least from the respective first and second drive intermediate cogwheels to the respective first and second communication cogwheels.

Hereby is achieved that the intermediate transmission can apply a pull or traction force to the respective first and second ends of the conveyor. The engagement or appliance of a force then depends on the direction of rotation so that a pull or traction force is from one end of a conveyor for one direction of rotation of the drive and that a pull or traction force is from the other end of the conveyor for an opposite direction of rotation of the drive.

A second independent invention may be a pile preparation unit (PPU) for preparing a pile of sheets. The pile of sheets has a first end, which first end is optionally standing on a pallet, and opposite a free second end, a front edge side and a side edge side.

The PPU comprises a rotation base configured for standing on a floor and for supporting a rotation unit, configured with an infeed side for receiving a pile of sheets in a feed direction. The pile of sheets may optionally be on a pallet. The rotation unit has a rotation unit frame with a rotation unit frame cross section. The rotation unit is configured with an edge side support unit, configured with an edge side support face to support an edge side of the pile of sheets when the pile of sheets is in a rotated position to lean on the edge side support face. The rotation unit has a lift unit configured to engage a lift plate to the free second end of the pile of sheets in the pile preparation position and to lift a pile of sheets.

In an aspect of the pile preparation unit (PPU), the rotation unit frame comprises two guides shifted in the feed direction relative to each other and each fixed to the rotation base and guiding a belt driven by a rotation unit drive system in the rotation base. The belt may be a timing belt. The belt may be a chain.

It is understood that the pile of sheets does not form part of the invention. However for clarity and understanding, the pile of sheets is an object to which the pile preparation unit is directed to. A person skilled in the art will thus appreciate modifications of the PPU according to variations in a size or shape of a pile of sheets.

Thus the PPU provides an effective and automated apparatus for preparing a pile of sheets for processing. The disclosed PPU may handle piles of sheets of a multiplicity of types of pile-shapes and -sizes as well as a multiplicity of sheet types and weights. The disclosed PPU saves time, the PPU allows for a quick setup for a new material in a pile of sheets. Piles prepared by the PPU will be more identical and PPU will provide a substantially constant throughput. The PPU may be fully integrated in an ERP system.

The rotation unit may rotate about a rotational axis, which axis may the feed direction. The rotation unit may be configured to rotate a conveyor about the feed direction. The conveyor may be configured to transport a pallet with a pile of sheets from the infeed side in the feed direction to a pile preparation position. In an aspect the belts encircle the conveyor.

A third independent invention may be related to changing the location of a pallet from one side of a pile of sheets to the opposite side of the pile of sheets, the following aspects of the invention is disclosed. The changing of the location of a pallet may also involve the exchange of a first pallet with a second pallet. The first pallet may be a disposable pallet such as a EUR-pallet and the second pallet may be a process pallet. A process pallet may be a type of pallet that is used in a specific clean environment.

In an aspect the rotating unit comprises a first conveyor configured to rotate with the rotating structure and the lift unit comprises a second conveyor configured as a second lift plate. This allows automatic handling and to extract existing process pallet and reuse it and apply on same pile of sheets after turning the pile 180 degrees.

In an aspect the lift unit comprises a first lift plate and a second lift plate, each configured to move and position in the lift structure to engage to the respective first end and second end of the pile of sheets.

Thereby providing a plate or face which position can be changed to support or carry a pile of sheets at the bottom and/or be removed from the top to generate the portal or space or volume required.

In an aspect the pile preparation unit may be for exchanging a first pallet with a second pallet. The pallet change module may comprise a first pallet portal with movable first pallet engagement means arranged to extend to an extraction position in the rotation unit. The pallet change module may comprise a second pallet portal with movable second pallet engagement means, arranged to extend to a delivery position in the rotation unit the first and second pallet portal vertically separated.

The lift unit may be configured to move and position the lift plate for the pallet end of the pile of sheets to be positioned at the respective extraction position and delivery position.

A fourth independent invention may be a pile preparation unit for changing a first pallet with a second pallet, the pallets for supporting a pile of sheets with a first end and second end where the pallet has a support side, supporting the pile of sheets at the first end and an opposite base side.

The pile preparation unit may comprise a rotation unit configured with an infeed opening for receiving a pallet with a pile of sheets. The rotation unit is configured with a rotating structure to rotate a lift unit about a rotational axis.

The lift unit may be configured with a lift structure fixed to the rotating structure and has a lift plate movable along the lift structure to engage with the second end of the pile of sheets and to move and position the pile of sheets transverse, relative to the rotational axis, providing a portal for changing a pallet.

The pallet preparation unit may comprise a pallet change module comprising a pallet portal with movable pallet engagement means for engaging with a pallet, for extraction from and/or insertion into the portal formed in an upper section of the rotation unit, when the lift plate is in the lower section of the rotation unit.

By a portal is understood a space or volume created where further actions or preparations can be performed. In particular this may involve actions or preparations where the pile of sheets being is to be prepared on a free end of the pile. Such actions may be a removal or extraction of a pallet, the insertion or delivery of a pallet, or both. Actions may also be a removal of sheets from the established free end of the pile.

The pallet preparation unit may thus receive a pile of sheets and exchange one pallet with another pallet in an automated fashion. The rotation unit may comprise a unit frame with a rotation unit frame cross section. The rotation unit may be configured to rotate a conveyer about the feed direction. The conveyer may be configured to transport a pallet with a pile of sheets from the infeed side in the feed direction to a pile preparation position.

In an aspect the pallet change module comprises a first pallet portal with movable first pallet engagement means arranged to extend to an extraction position in the rotation unit.

The pallet change module may comprise a second pallet portal with movable second pallet engagement means arranged to extend to a delivery position in the rotation unit, where the first and second pallet portals are vertically separated.

The lift may be configured to move and position the lift plate for the pallet end of the pile of sheets to be positioned at the respective extraction position and delivery position.

In an aspect the pallet change module is arranged on the side of the rotation unit and to extend the pallet engagement means, the first or second or both pallet engagement means into the rotation unit from a transverse direction to the rotational axis. The direction of insertion may be essentially horizontal and the pallet change module may be arranged on the side of the rotation unit relative to the infeed on a front. The pallet change module may comprise guides and supports as required to achieve a horizontal movement of a pallet. Likewise the engagement means are complementary in shape to the pallets. The engagement means may be adjustable to enable a fit to pallets of different types. A person skilled in the art will appreciate a need to perform adjustments and balance or dimension the construction as required for a pallet of a specific type to be moved in the pallet portal. Counterweights may be required. Similarly actuators may be required to adjust the position and the placement of the engagement means and thus the positioning of the pallet. The drive system may be a belt drive type of system that drives the movement. In one embodiment the first and second pallet engagement means may be identical.

In an aspect the pile preparation unit may further comprise a pallet loading unit arranged on the opposite side of the pallet change module and with a pallet loading arm fixed to the rotation unit. The pallet loading arm is configured to engage with and support a second pallet during rotation of the rotating unit and to release the second pallet on the second pallet engagement means. The pallet loading unit is configured to engage with and support a second pallet during rotation of the rotating unit and to release the second pallet on the second pallet engagement means. The pallet loading unit may be configured with a pallet loading arm fixed to the rotating structure of the rotation unit and for engaging with a second pallet so that when the rotating unit rotates the pile of sheets the loading arm transports the second pallet, and turns it upside-down for delivery of the second pallet on the second pallet engagement means in the correct orientation for immediate insertion into the portal.

A fifth independent invention may be a pile sheet remover system (PSR) for preparing a pile of sheets with a height, a free end, and a side of sheet edges for processing in a pile preparation unit (PPU).

The PSR may comprise a sheet removing unit having a support frame supporting a moving frame, configured for a linear movement in an attack direction towards the side and the free end of the pile of sheets.

The moving frame may have a side support plate with a side support face arranged to face and apply to the side of the pile of sheets.

The PSR may have a grab plate arranged with a grab face essentially perpendicular to the side support face and extending beyond the side support face in the attack direction, configured with a grab actuator for a grab movement towards the free end of the pile of sheets.

The PSR may have one or more attack knives arranged below the grab plate to face the side of the pile of sheets, and configured with one or more attack actuators for a first attack movement in the attack direction for insertion of the one or more attack knives between a pair of sheets, i.e. between two adjacent sheets

It is thereby achieved that top sheets can be removed automatically. Furthermore the arrangement can be adjusted according to different characteristics of a pile of sheets. A further advantage is that the system can be arranged in a pile preparation unit, which in other aspects such are turning the pile, airing the pile or changing of a pallet or the location of the pallet.

In an aspect there is a first attack knife for a first attack movement and a second attack knife for a second attack movement. The first attack knife may be a smaller knife with a blade in the attack direction. The first knife may be a razor blade type of knife. The second attack knife may be larger than the first knife and with a sharp and point type of form in the attack direction. The knife may also be a stylus type of shape.

In an aspect one or more second attack knives are configured with one or more transverse actuators for a movement transverse to the line of attack direction and parallel to the sheet edges. The knives used for the transverse movement may be second attack knives. There may be one knife for a transverse movement from a center area to a periphery. There may be another knife for a transverse movement from the center area to a periphery on the other side. There may be two second attack knives, each being configured with individual transverse actuators.

This effectively separates sheets to be removed from the remaining sheets. A further advantage is that the transverse movement leaves the knives in a favorable position when the actual removal takes place and thus decreases the risk of destroying the sheets.

In an aspect one or more first attack knives are configured with one or more edge lift actuators for a lift movement transverse to the line-of-attack direction and perpendicular to the sheet edges. The lift movement lifts the edge of the sheets upwardly and thus makes it possible for a further insertion into the sheets. Advantageously the movement is performed swiftly to increase the separation of sheets. The lift actuators may be pneumatic actuators. The actuators may be adjustable in action length or speed.

In an aspect one or more attack knives are configured for a second attack movement extending the first attack movement in the attack direction for further insertion of the one or more attack knives between the pair of sheets. This second movement may be provided by the same actuator used for the first movement. The second movement may also be provided by additional actuators. Thus there may be a first set of actuators and a second set of actuators.

### Description of the Drawing

Embodiments of the invention will be described in the figures, whereon:
- Fig. 1: illustrates the pile preparation unit with a pile of sheets on a pallet;
- Fig. 2: illustrates the rotation unit and a close up of the rotation unit drive system;
- Fig. 3: illustrates the rotation unit frame cross section;
- Fig. 4: illustrates the pile preparation unit without a pile of sheets on a pallet;
- Fig. 5: illustrates a pile preparation unit in a rotated position with a large pile of sheets on a pallet;
- Fig. 6: illustrates a pile preparation unit in a rotated position with a small pile of sheets on a pallet;
- Fig. 7: illustrates the lift unit and a close up of the lift unit safety lock;
- Fig. 8: illustrates the pile support unit in home position;
- Fig. 9: illustrates the pile preparation unit and a cross section of the blower unit and the pile support unit;
- Fig. 10: illustrates a method for preparing a pile of sheets;
- Fig. 11: illustrates a top view of the pile preparation unit;
- Fig. 12: illustrates the first part of the preparation of a pile of sheets; and
- Fig. 13: illustrates the second part of the preparation of a pile of sheets.

### Detailed Description of the Invention

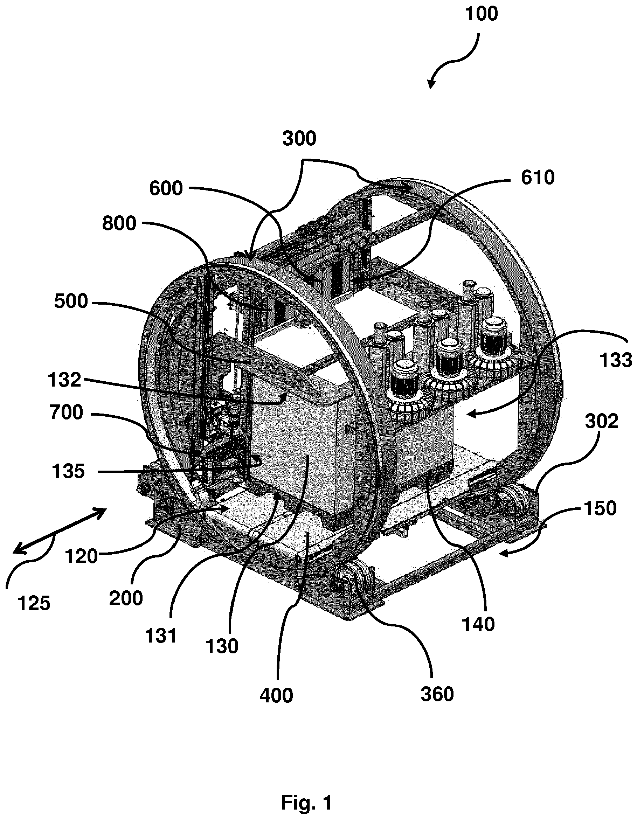

Figure 1 shows a pile preparation unit (PPU) 100 on a floor 150. The PPU 100 comprises a plurality of parts. One part is a rotation base 200, which is the base for the rotation unit 300.

Another part is a conveyor 400 for transporting the pile of sheets 130 from a first end 131 and a second end 132.

Another part is a lift unit 500 for reading the height of the pile of sheets 130 when a new pile of sheets 130 arrives and to maintain the pile of sheets 130 during the preparation process.

Another part is the edge side support 600, which comprises a pile support unit 700 and a blower unit 800. The pile support unit 700 and the blower unit 800 creates an edge side support face 610 to support an edge side of the pile of sheets 130 when the pile of sheets 130 is in a rotated position to lean on the edge side support face 610.

In figure 1 a pallet 140 with a pile of sheets 130 is placed on the conveyor 400. The pile of sheets 130 has a first end 131 standing on the pallet 140 and opposite a free second end 132.

The rotation unit 300 is configured with an infeed side 120 for receiving a pallet 140 with a pile of sheets 130 in a feed direction 125. The rotation unit 300 has a rotation unit frame 302 with a rotation unit frame cross section 304. The rotation unit 300 is configured to rotate about the feed direction 125. The rotation may be around the rotation axis.

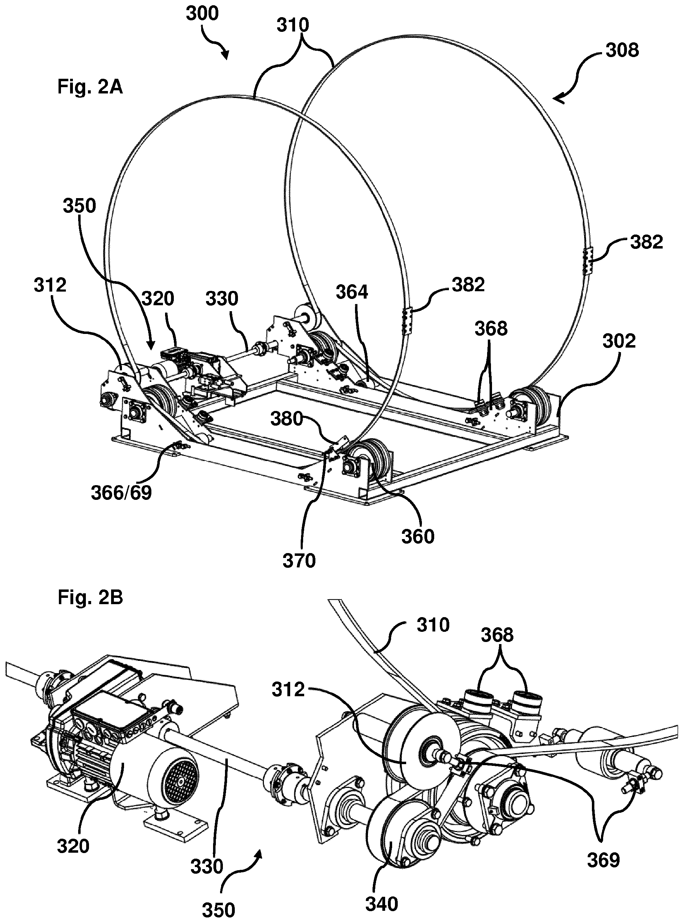

Figure 2A illustrates the rotation unit 300 and figure 2B illustrates a close up of one of the two rotation unit drive wheel 340 sections.

The rotation unit 300 is the main unit for the preparation process. The main units/functions required for the preparation process is installed in the rotation unit 300.

The control system controls the rotation unit position. The rotation degree set in recipes is monitored and adjusted automatically. A home position reference sensor 370 detects the home position of the rotation unit 300. When the rotation unit motor 320 runs the rotation, travel distance information is transferred to the control system which enables stopping at predetermined degrees with accuracy.

The rotation unit drive system 350 is installed on the rotation unit frame 302 as shown in figure 2A.

The rotation unit drive system 350 rotates with the rotation unit 300 in turning degrees stated in recipes. To begin with the rotation unit 300 is turned close to 90°, then at other degrees as stated in recipe steps, and finally back to 0° again.

The rotation is accomplished with a rotation unit motor 320 allowing controlled turning speed and precise positioning of the rotation unit 300 at the determined stop positions. The drive is accomplished by means of two rotation unit timing belts 310, driving the two rotation unit rings 308.

The rotation unit 300 is driven by a rotation unit motor 320 allowing precise positioning. The rotation unit motor 320 communicates with the rotation unit drive wheels 340 through a rotation unit drive shaft 330. The rotation unit drive wheels 340 (one for each side) drives two rotation unit timing belts 310 attached to the rotation unit turning rings 308. Rotation unit support rollers 364, rotation unit side support bearings 368 and main idling support rollers 360 keep the rotation unit 300 in position. The tension of the rotation unit timing belts 310 is secured by the timing belt tensioner 312.

Figure 2B illustrates a close up of one of the two rotation unit drive wheel 340 sections.

A rotation unit motor 320 communicates with a rotation unit drive wheel 340 through a rotation unit drive shaft 330. The rotation unit drive wheel 340 drives the rotation unit timing belts 310 attached to rotation unit turning rings 308. The tension of the rotation unit timing belts 310 is secured by the timing belt tensioner 312.

Figure 2B also shows rotation unit side support bearings 368 and two adjuster screws 369.

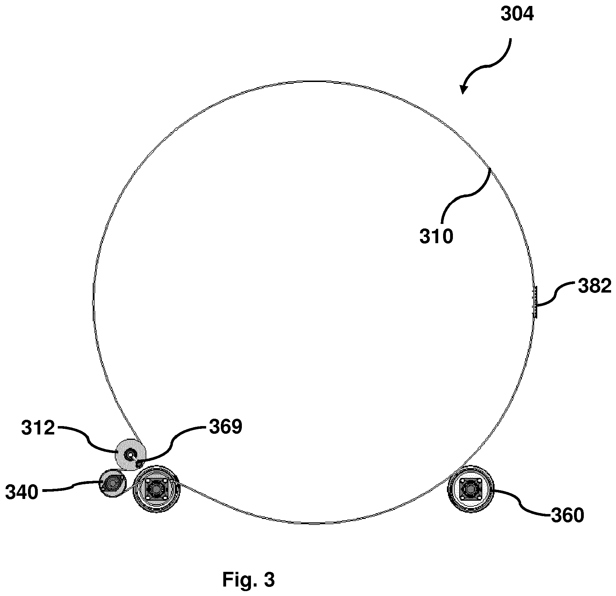

Figure 3 illustrates the rotation unit frame cross section 304. The rotation unit frame cross section 304 comprises a rotation unit timing belt 310 with a fix block 382. The rotation unit timing belt 310 is driven by the rotation unit drive wheel 340 and the tension in the rotation unit timing belt 310 is kept by the timing belt tensioner 312, which can be adjusted by the adjuster screw 369. The main idling support roller 360 keeps the rotation unit 300 in position.

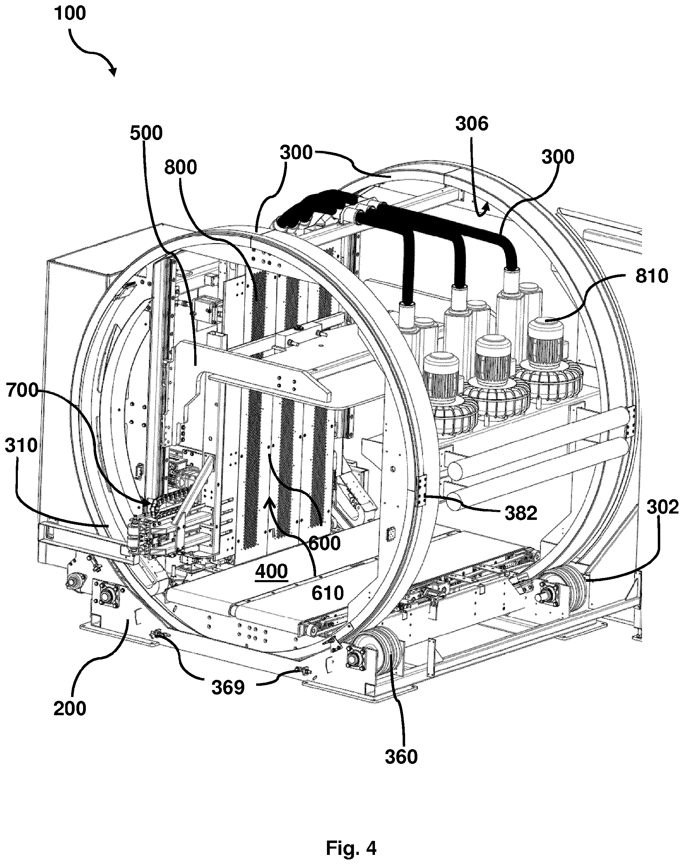

Figure 4 illustrates the PPU 100 without a pile of sheets 130 and a pallet 140. The PPU 100 comprises a rotation base 200, which is the base for the rotation unit 300, a conveyor 400, a lift unit 500, an edge side support 600, a pile support unit 700 and a blower unit 800.

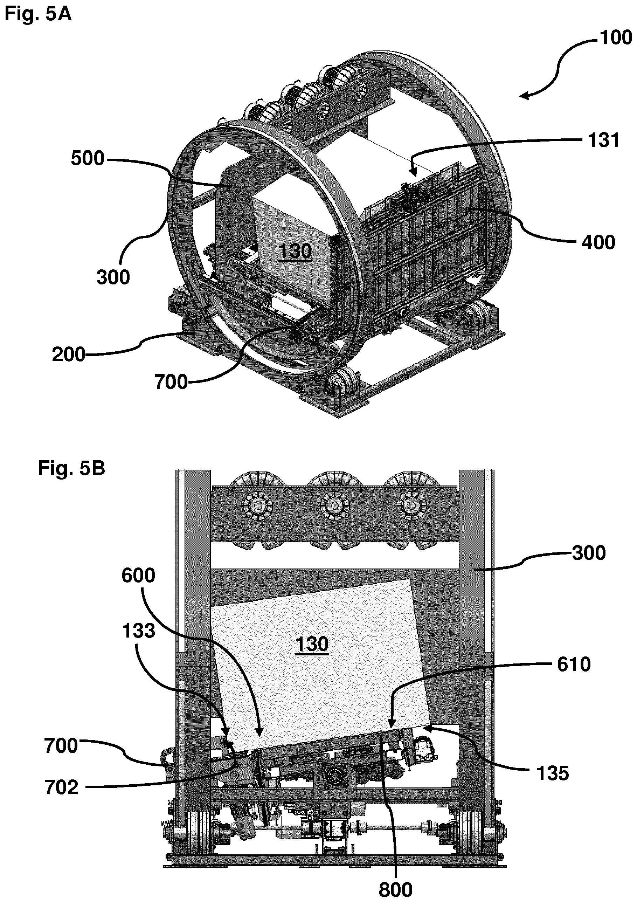

Figure 5 illustrates a PPU 100 in a rotated position with a large pile of sheets 130 on a pallet 140. Figure 5A and figure 5B illustrate the same arrangement at different angles, but figure 5B does not show the conveyor 400.

In figure 5A the PPU 100 is rotated almost 90 degrees and tilted a few degrees, say 0 to 45 degrees. The tilt direction is perpendicular to the rotation direction. The tilt is to secure a proper connection between the pile of sheets 130 and the edge support face 610.

Figure 5B illustrates how the front edge side 133 of the pile of sheets 130 connects with the pile support face 702, and how the side edge side 135 connects with the edge side support face 610.

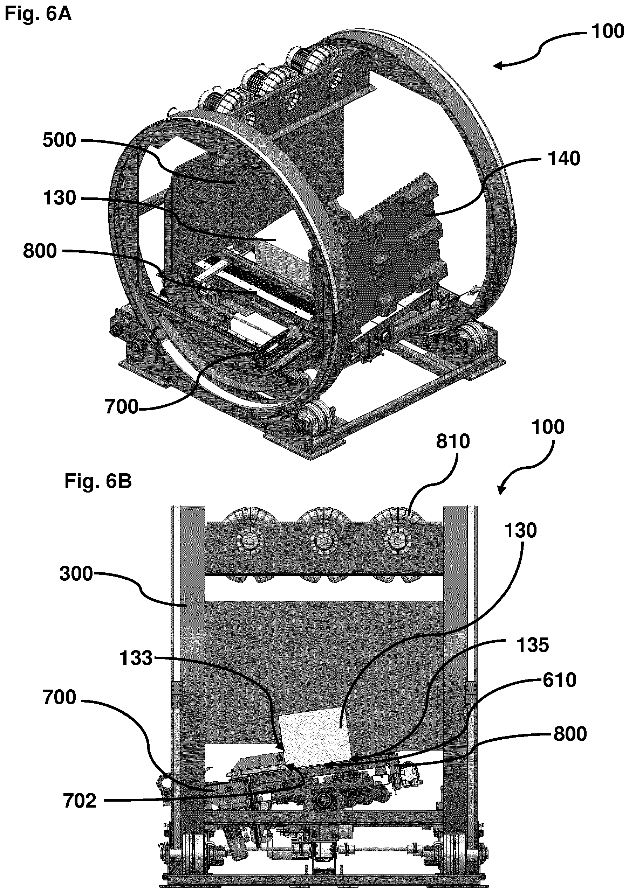

Figure 6 illustrates a PPU in a rotated position with a small pile of sheets on a pallet. Figure 6A and figure 6B illustrate the same arrangement at different angles, but figure 6B does not show the conveyor 400.

In figure 6A the PPU 100 is rotated almost 90 degrees and tilted a few degrees. The tilt direction is perpendicular to the rotation direction. The tilt is to secure a proper connection between the pile of sheets 130 and the edge support face 610.

Figure 6B illustrates how the front edge side 133 of the pile of sheets 130 connects with the pile support face 702, and how the side edge side 136 connects with the edge side support face 610.

Figure 5 and figure 6 illustrate that the PPU 100 can handle different sizes of piles of sheets 130.

In other embodiments the pile of sheets 140 may have different geometric shapes.

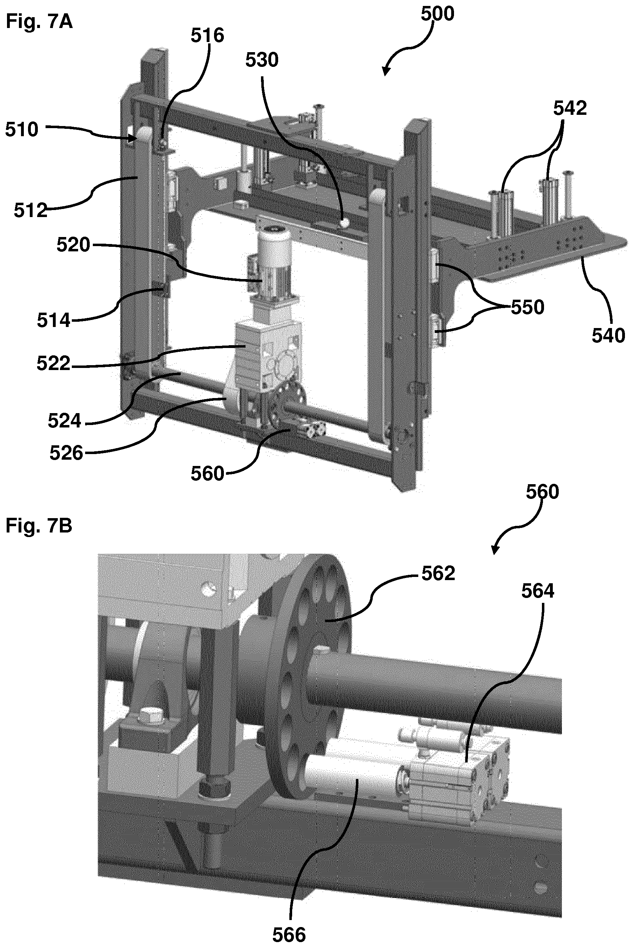

Figure 7A illustrates the lift unit 500. The two main functions for the lift unit 500 are to read the pile of sheets' 130 height when a new pile of sheets 130 arrives and to maintain the pile of sheets 130 during the preparation process.

When a new pile of sheets 130 arrives, the lift plate 540 moves downwards, until the second end 132 of the pile of sheets 130 is detected. The lift unit photocell 530 is installed in the lift plate 540 for this purpose. The lift plate 540 continues to move downwards and puts pressure on the pile of sheets 130 second end 132. The control system reads the position of the lift plate 540 (reported by the motor resolver) and stores the position as the height of the pile of sheets 130. This value is used for different purposed in the preparation process.

The pile of sheets 130 is supported by the lift plate 540 during the process. The pile of sheets 130 is turned at different degrees as defined in the used recipe. The lift plate 540 supports the pile of sheets. Lift positions is also defined in recipes and can increase/decrease space to the pile of sheets 130 in order to allow good aeration of the pile of sheets 130. The lifting plate movement is controlled by a lift unit motor 520 allowing precise positioning of the lift plate 540.

The lift unit motor 520 drives the two parallel lift unit timing belts 512 attached to the linear guide system 550 (one at each side). Each lift unit timing belt 512 is joined with a clamp unit 514. Tensioning is carried out by means of the tension screw 516 on top of the timing belt system 510.

The drive motor gear 522 is attached to the lift unit drive shaft 524 by means of one triple drive chain 526. The lift plate 540 is attached to the linear guide system 550 on both sides. Four lift plate cylinders 542 are installed on the lift plate 540 to enable preparation of pallets 140 between 850 mm and 650 mm. The pile preparation range height is between 650 mm and up to 1650 mm.

Figure 7B illustrates a close up of the lift safety lock 560.

The lift safety lock 560 is a safety device that will lock the lift unit 500 if power and/or air pressure change or even disappear. The lift safety lock 560 is designed as one disk 562 with stop holes and two lift safety lock cylinders 564.

Each lift safety lock cylinder 564 is equipped with a spring loaded piston 566. The distance between the spring loaded pistons 566 corresponds to 1, 5 stop holes.

This means that only one of the lift safety lock cylinders 564 can be in locking position at a time. When the position is to be locked (secured) both lift safety lock cylinders 564 are deactivated, and the springs forces the two spring loaded pistons 566 towards to the surface of the lift safety lock disk 562. One of the spring loaded pistons 566 enters a hole as it comes into position.

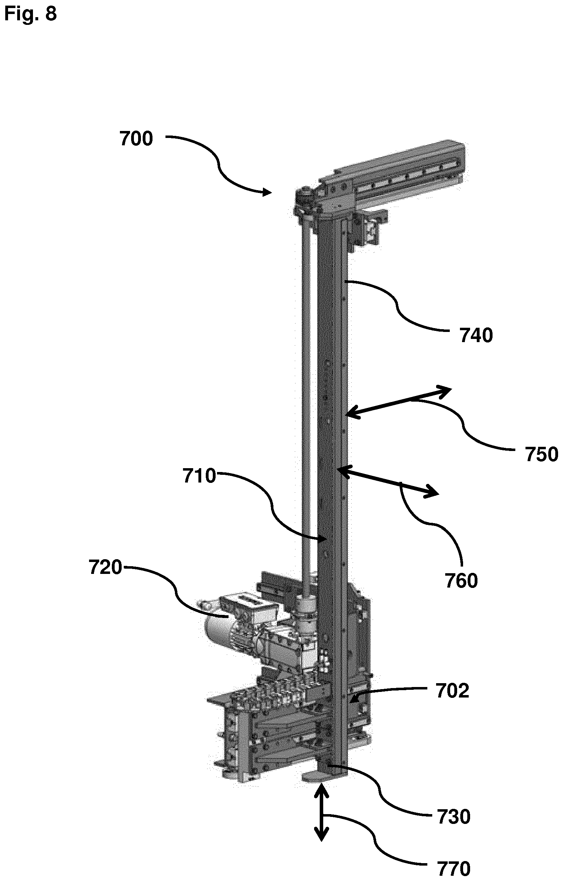

Figure 8 illustrates the pile support unit 700 in home position.

In home position, the pile support unit 700 is in the innermost position so that the pile support bar 740 is in line with the blower unit 800. The pile support motor 720 runs the pile support units' positioning function. The pile support bar 740 can move in an in/out direction 750 and a sideways direction 760.

The pile support rod 730 is activated by the pile support air cylinder 710 installed inside the pile support bar 740. The purpose of the pile support rod 730 is to move the support rod 730 down onto the pallet 140 and put a light pressure on the pallet 140. The support rod 730 moves in a rod direction 770.

Pressure can be adjusted by means of the pressure regulator installed on the upper rear side of the blower unit 800.

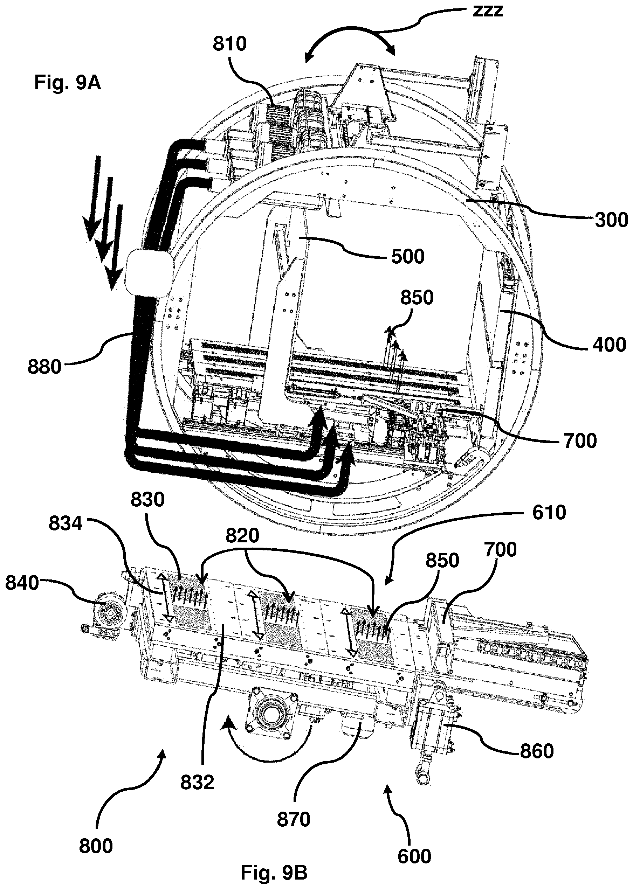

Figure 9A illustrates the PPU 100 when it is turned in a turn direction and tilted 8 degrees in a tilt direction.

The blower unit 800 is used when the pile of sheets is turned. The purpose is to minimize friction between sheets and line up the sheets in the pile of sheets 130 nicely. The side channel blowers 810 supply air for the blower unit 800, the air is transported through the blower hoses 880.

When the blower unit 800 is turned it becomes a base for the pile of sheets 130 when preparing the sheets in the pile of sheets 130.

Figure 9B illustrates a cross section of the blower unit 800 and the pile support unit 700.

The air flow 850 blows out from air mouthpieces 820 installed in the blower unit 800. Air mouthpieces 820 move along the blower plate 832 during the vibration process.

The moveable air mouthpieces 820 are installed in blower conveyor belts 830, driven by an air mouthpiece conveyor drive motor 840. The air mouthpieces 820 have a blower conveyor belt movement 834 as indicated in figure 9B. The speed of the air mouthpiece conveyor drive motor 840 is altered automatically, based on the material of the pile of sheets 130.

The blowing unit 800 is installed on rubber brackets to reduce vibration in other parts than the blow/vibration section. Vibration is accomplished by means of two vibration units, one of which is disclosed in figure 9B. Thus the vibration may be performed fully automatically.

The blower unit 800 consists of three powerful standard side channel blowers 810. The side channel blowers 810 supply air for the blower unit 800 when the pile of sheets 130 is turned as defined in recipes. The amount of air flow 850 is also defined in recipes based on the material of the pile of sheets 130. The air flow 850 control is achieved by a frequency converter controlling the speed of the side channel blower motors.

The blower unit 800 is tilted 8° (say between 0 to 45 degrees), so the pallet 140 can slide towards the edge side support unit 600 and the pile of sheets 130 can slide towards the pile support unit 700, before the blow and vibration process is started.

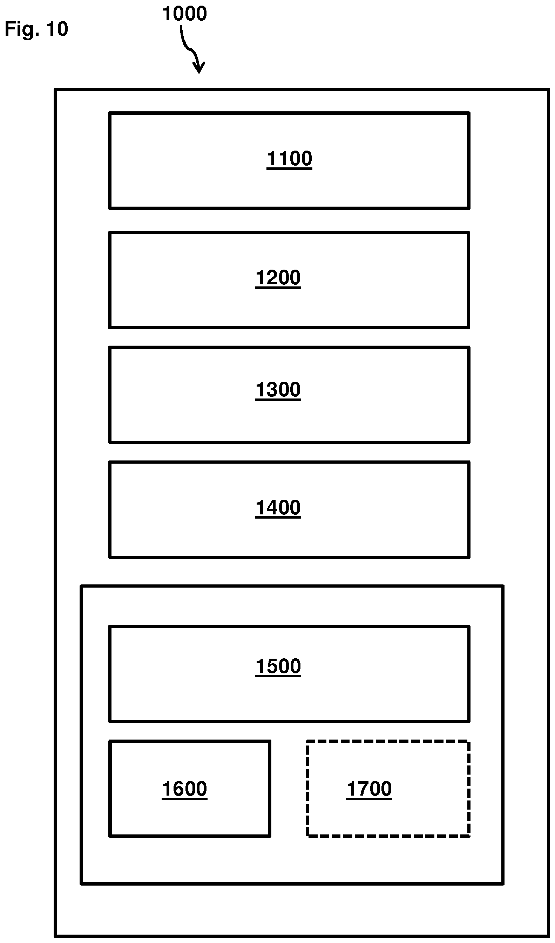

Figure 10 illustrates a method 1000 of preparing a pile of sheets 130 for processing, which may comprise one or more of the following acts. The acts may be performed by using structural features previously disclosed.

There may be an act of preparing 1100 a PPU 100 for receiving a pile of sheets 130 for free transport to a pile preparation position 127.

There may be an act of placing 1200 the pile of sheets 130 at the pile preparation position 127 with the side edge side 135 of the pile of sheets 130 in the vicinity of an edge side support face 610 of the edge support unit 600.

There may be an act of engaging 1300 a pile support face 702 of a pile support unit 700 on the front edge side 133 of the pile of sheets 130.

There may be an act of rotating 1400 the pile of sheets 130 to about 90 degrees for the edge side support face 610 to support the side edge side 135 of the pile of sheets 130.

There may be acts that are repeated as required and as follows.

There may be an act of tilting 1500 the pile of sheets 130 towards the pile support face 702.

There may be an act of blowing 1600 the pile of sheets 130, where blowing 1600 is into the pile of sheets 130 from the edge side support face 610.

There may be an act of vibrating 1700 the edge side support face 610 and then the pile of sheets 130.

The act of blowing 1600 may be performed whilst moving air mouthpieces 820 in the first end 131 - second end 132 directions "top-down"-direction of the pile of sheets 130.

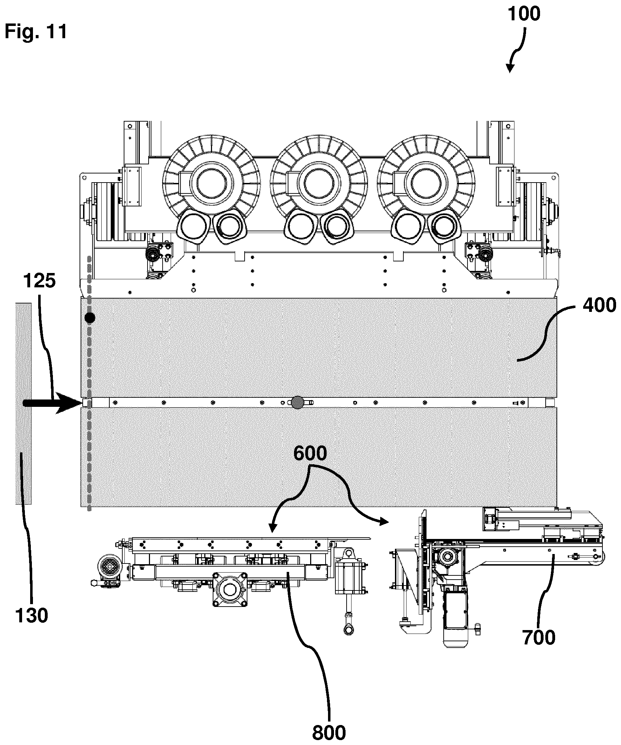

Figure 11 illustrates a top view of the PPU 100 before a pile of sheets is 130 fed in the infeed side 120. The pile of sheets 130 is moving in the feed direction 125.

The dotted line represents a photocell beam, which is used to measure the length of pile of sheets 130 as it moves into the PPU 100.

The large dot in the center of the conveyor 400 is a photocell that checks if a material is present.

Figure 11 illustrates the edge side support unit 600 comprising the side support rod 700 and the blower unit 800.

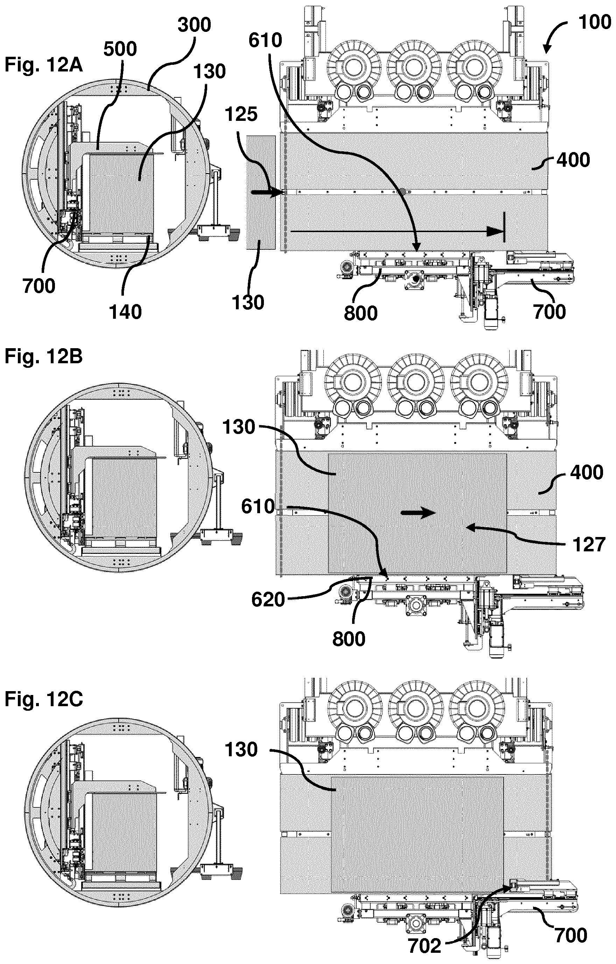

Figure 12 illustrates the first part of the preparation of a pile of sheets. The figures 12A - 12C illustrate a side view and a top view of the pile preparation unit 100 during operation.

The right side of figure 12A illustrates a top view of the PPU 100 before a pile of sheets 130 is fed in the infeed side 120. The pile of sheets 130 is moving in the feed direction 125.

The dotted line represents a photocell beam, which is used to measure the length of pile of sheets 130 as it moves into the PPU 100. The length measurement is used to calculate pile preparation position 127.

The large dot in the center of the conveyor 400 is a photocell that checks if a material is present.

The left side of figure 12A illustrates a side view of the PPU 100 with the pile of sheets 130 placed at the pile preparation position 127. In this figure, the lift unit 500 has clamped down onto the second end 132 of the pile of sheets 130.

The right side of figure 12B illustrates a top view of the PPU 100 at the moment when the pile of sheets is 130 is stopped at the pile preparation position 127. The figure discloses that the side edge side 135 of the pile of sheets 130 is placed in the vicinity of an edge side support face 610 of the edge support 620. In this embodiment the blower unit 800 is the edge side support 620.

The left side of figure 12B illustrates a side view of the PPU 100 with the pile of sheets 130 placed at the pile preparation position 127. In the figure the lift unit 500 has clamped down onto the second end 132 of the pile of sheets 130.

The right side of figure 12C illustrates a top view of the PPU 100 where the pile of sheets is 130 at the pile preparation position 127. The figure discloses part of the act of engaging 1300 a pile support face 702 of a pile support unit 700 on the front edge side 133 of the pile of sheets 130. In this figure the pile support unit 700 is moved in the in-/outward direction 750.

The left side of figure 12C illustrates a side view of the PPU 100 with the pile of sheets 130 placed at the pile preparation position 127. In the figure the lift unit 500 has clamped down onto the second end 132 of the pile of sheets 130.

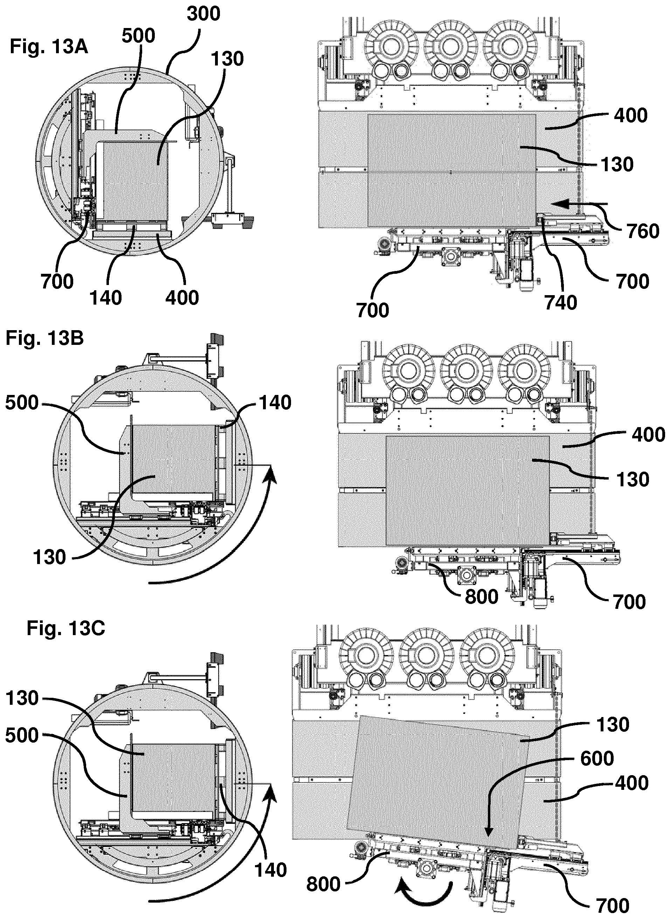

Figure 13 illustrates the second part of the preparation of a pile of sheets. The figures 13A - 13C illustrate a side view and a top view of the PPU 100 during operation.

The right side of figure 13A illustrates a top view of the PPU 100 where the pile of sheets is 130 at the pile preparation position 127. The figure discloses part of the act of engaging 1300 a pile support face 702 of a pile support unit 700 on the front edge side 133 of the pile of sheets 130. The engagement between the pile support face 702 of the pile support unit 700 and the front edge side 133 of the pile of sheets 130 is met by moving the pile support bar 740 in a sideways direction 760.

The left side of figure 13A illustrates a side view of the PPU 100 with the pile of sheets 130 placed at the pile preparation position 127. In this figure the lift unit 500 has clamped down onto the second end 132 of the pile of sheets 130.

The right side of figure 13B illustrates a top view of the PPU 100 where the pile of sheets is 130 at the pile preparation position 127.

The left side of figure 13B illustrates a side view of the PPU 100 with the pile of sheets 130 placed at the pile preparation position 127. In this figure the PPU 100 has rotated about 90 degrees.

The right side of figure 13C illustrates a top view of the PPU 100 where the pile of sheets is 130 at the pile preparation position 127. The edge side support unit 600 has tilting means and the act of tilting 1500 the pile of sheets 130 towards the pile support face 702 is shown in the figure.

The tilting angle may be a few degrees. In one embodiment the tilting angle is about 8 degrees or say between 0 and 45 degrees.

At this point in preparation of the pile of sheets, there may be an act of blowing 1600 the pile of sheets 130, where blowing 1600 is into the pile of sheets 130 from the edge side support face 610. Blowing may be performed by applying airflow. There may be an act of vibrating 1700 the edge side support face 610 and then the pile of sheets 130. The act of blowing 1600 may be performed whilst moving air mouthpieces 820 in the first end 131 - second end 132 directions "top-down"-direction of the pile of sheets 130.

The left side of figure 13C illustrates a side view of the PPU 100 with the pile of sheets 130 placed at the pile preparation position 127. In the figure the PPU 100 has rotated approximately 90 degrees.

| **Item** | **No** |
|---|---|
| Pile preparation unit (PPU) | 100 |
| Infeed side | 120 |
| Feed direction | 125 |
| Pile preparation position | 127 |
| Pile of sheets | 130 |
| First end | 131 |
| Second end | 132 |
| Front edge side | 133 |
| Side edge side | 135 |
| Pallet | 140 |
| Floor | 150 |
| Rotation base | 200 |
| Rotation unit | 300 |
| Rotation unit frame | 302 |
| Rotation unit frame cross section | 304 |
| Guides | 306 |
| Rotation unit turning ring | 308 |
| Rotation unit timing belt | 310 |
| Timing belt tensioner | 312 |
| Rotation unit motor | 320 |
| Rotation unit drive shaft | 330 |
| Rotation unit drive wheel | 340 |
| Rotation unit drive system | 350 |
| Main idling support roller | 360 |
| Lift unit support roller | 362 |
| Rotation unit support roller | 364 |
| Rotation unit support roller adjuster | 366 |
| Rotation unit side support bearings | 368 |
| Adjuster screw | 369 |
| Home position reference sensor | 370 |
| Metal block | 380 |
| Fix block | 382 |
| Conveyor | 400 |
| Lift Unit | 500 |
| Lift unit timing belt system | 510 |
| Lift unit timing belt | 512 |
| Clamp unit | 514 |
| Tension screw | 516 |
| Lift unit motor | 520 |
| Drive motor gear | 522 |
| Lift unit drive shaft | 524 |
| Triple drive chain | 526 |
| Lift unit photocell | 530 |
| Lift plate | 540 |
| Lift plate cylinders | 542 |
| Linear guide system | 550 |
| Lift safety lock | 560 |
| Lift safety lock disk | 562 |
| Lift safety lock cylinders | 564 |
| Spring loaded piston | 566 |
| Edge side support unit | 600 |
| Edge side support face | 610 |
| Edge side support | 620 |
| Pile Support Unit | 700 |
| Pile Support face | 702 |
| Pile Support air cylinder | 710 |
| Pile Support motor | 720 |
| Pile Support rod | 730 |
| Pile Support bar | 740 |
| In-/outward direction | 750 |
| Sideways direction | 760 |
| Rod direction | 770 |
| Blower Unit | 800 |
| Side Channel Blower | 810 |
| Air mouthpiece | 820 |
| Blower conveyor belt | 830 |
| Blower plate | 832 |
| Blower conveyor belt movement | 834 |
| Air blow mouth piece conveyor drive motor | 840 |
| Air flow | 850 |
| Tilt cylinder | 860 |
| Vibration unit | 870 |
| Blower hose | 880 |
| Vibration unit | 890 |
| Drive system | |
| Method | 1000 |
| Preparing | 1310 |
| Placing | 1200 |
| Engaging | 1300 |
| Rotating | 1400 |
| Tilting | 1500 |
| Blowing | 1600 |
| Vibrating | 1700 |

## Claims

1. A pile preparation unit (PPU) (100) for preparing a pile of sheets (130) having a first end (131) optionally standing on a pallet (140) and opposite a free second end (132), a front edge side (133) and a side edge side (135), the pile preparation unit (100) comprising:
- a rotation base (200) configured for standing on a floor (150) and for supporting
- a rotation unit (300) configured with an infeed side (120) for receiving a pile of sheets (130) in a feed direction (125), the rotation unit (300) having a rotation unit frame (302) with a rotation unit frame cross section (304) the rotation unit (300) configured to rotate about the feed direction (125):
- an edge side support unit (600) configured with an edge side support face (610) to support an edge side of the pile of sheets (130) when the pile of sheets (130) is in a rotated position to lean on the edge side support face (610); the pile preparation unit being **characterized in that** it further comprises
- a lift unit (500) configured to engage a lift plate (540) to the free second end (132) of the pile of sheets (130) in the pile preparation position (127) and to lift a pile of sheets (130) and
**in that** the edge side support unit (600) further is configured with a pile support unit (700) configured with a pile support face (702) for engaging and supporting the front edge side (133) of the pile of sheets (130).

2. The pile preparation unit (PPU) (100) according to claim 1, wherein the rotation unit frame (302) comprises two guides (306) shifted in the feed direction (125) relatively to each other and each fixed to the rotation base (200) and guiding a belt (310) driven by a rotation unit drive system (350) in the rotation base (200).

3. The pile preparation unit (PPU) (100) according to any previous claim, wherein the edge side support unit (600) is pivotally arranged to tilt the edge side support unit (600) when rotated about 90 degrees.

4. The pile preparation unit (PPU) (100) according to any previous claim, wherein the edge side support unit (600) further is configured with a blower unit (800) configured to blow into the edge side of the pile of sheets (130) from the edge side support face (610).

5. The pile preparation unit (PPU) (100) according to any previous claim, wherein the blower unit (800) has air mouthpieces (820) installed in blower conveyor belts (830) configured for movements along a pile of sheets (130).

6. The pile preparation unit (PPU) (100) according to any previous claim, wherein the edge side support unit (600) further is configured with one or more vibration units (890) configured to vibrate the edge side support face (610).

7. The pile preparation unit (PPU) (100) according to any previous claim, wherein the rotation unit (300) further comprising a conveyor (400) configured to transport a pallet (140) with a pile of sheets (130) from the infeed side (120) in the feed direction (125) to a pile preparation position (127);

8. The pile preparation unit (PPU) (100) according to claim 7, wherein the belts (310) encircles the conveyor (400).

9. Method (1000) of preparing a pile of sheets (130) for processing, the pile of sheets (130) having a first end (131) optionally standing on a pallet (140) and opposite a free second end (132), a front edge side (133) and a side edge side (135), the method (1000) comprising acts of:
- Preparing (1100) a pile preparation unit (100) for receiving a pile of sheets (130) for free transport to a pile preparation position (127);
- Placing (1200) the pile of sheets (130) at the pile preparation position (127) with the side edge side (135) of the pile of sheets (130) in the vicinity of an edge side support face (610) of the edge support unit (600) the method being **characterized by** further comprising acts of:
- Engaging (1300) a pile support face (702) of a pile support unit (700) on the front edge side (133) of the pile of sheets (130);
- Rotating (1400) the pile of sheets (130) to about 90 degrees for the edge side support face (610) to support the side edge side (135) of the pile of sheets (130); and repeatedly as required:
- Tilting (1500) the pile of sheets (130) against the pile support face (702);
- Blowing (1600) and optionally vibrating (1700) the pile of sheets (130), where blowing (1600) is into the pile of sheets (130) from the edge side support face (610).

10. Method (1000) according to claim 9, wherein the act of blowing (1600) is performed whilst moving air-mouthpieces (820) in "first end"-"second end"-directions ("top-down"-directions) of the pile of sheets (130).

11. Method (1000) according to claim 9 or 10, wherein there is one or more acts of:
- Storing any previously performed set of acts
- Editing any previously performed set of acts
- Retrieving any previously performed set of acts; and
- Executing any previously performed set of acts.

## Patentansprüche

1. Stapelvorbereitungseinheit (PPU) (100) zur Vorbereitung eines Bogenstapels (130) mit einem ersten Ende (131), optional auf einer Palette (140) und gegenüber einem freien zweiten Ende (132) stehend, einer Vorderkantenseite (133) und einer Seitenkantenseite (135), wobei die Stapelvorbereitungseinheit (100) Folgendes umfasst:
- eine Rotationsbasis (200), die zum Stehen auf einem Boden (150) sowie zum Tragen konfiguriert ist
- einer Rotationseinheit (300), die mit einer Einspeiseseite (120) zum Empfangen eines Bogenstapels (130) in einer Förderrichtung (125) konfiguriert ist, wobei die Rotationseinheit (300) einen Rotationseinheitenrahmen (302) mit einem Rotationseinheitenrahmenquerschnitt (304) aufweist, wobei die Rotationseinheit (300) dazu konfiguriert ist, um die Förderrichtung (125) zu rotieren:
- eine Kantenseitenträgereinheit (600), die mit einer Kantenseitenträgerfläche (610) zum Tragen einer Kantenseite des Bogenstapels (130) konfiguriert ist, wenn der Bogenstapel (130) in einer rotierten Position liegt, um an einer Kantenseitenträger-fläche (610) zu lehnen; wobei die Stapelvorbereitungseinheit **dadurch gekennzeichnet ist, dass** sie ferner Folgendes umfasst:
- eine Hubeinheit (500), die dazu konfiguriert ist, eine Hubplatte (540) zu dem freien zweiten Ende (132) des Bogenstapels (130) in der Stapelvorbereitungsposition (127) in Eingriff zu nehmen und einen Bogenstapel (130) anzuheben, und dadurch, dass die Kantenseitenträgereinheit (600) ferner mit einer Stapelträgereinheit (700) konfiguriert ist, die mit einer Stapelträgerfläche (702) zum Engriffnehmen und Tragen der Vorderkantenseite (133) des Bogenstapels (130) konfiguriert ist.

2. Stapelvorbereitungseinheit (PPU) (100) nach Anspruch 1, wobei der Rotationseinheitenrahmen (302) zwei Führungen (306) umfasst, die in der Förderrichtung (125) relativ zueinander verschoben sind und jeweils an der Rotationsbasis (200) fixiert sind, und ein Band (310), das durch ein Rotationseinheitenantriebssystem (350) in der Rotationsbasis (200) angetrieben wird, führt.

3. Stapelvorbereitungseinheit (PPU) (100) nach einem der vorhergehenden Ansprüche, wobei die Kantenseitenträgereinheit (600) schwenkbar angeordnet ist, um die Kantenseitenträgereinheit (600) zu neigen, wenn sie um etwa 90 Grad rotiert.

4. Stapelvorbereitungseinheit (PPU) (100) nach einem der vorhergehenden Ansprüche, wobei die Kantenseitenträgereinheit (600) ferner mit einer Gebläseeinheit (800) konfiguriert ist, die dazu konfiguriert ist, von der Kantenseitenträgerfläche (610) in die Kantenseite des Bogenstapels (130) zu blasen.

5. Stapelvorbereitungseinheit (PPU) (100) nach einem der vorhergehenden Ansprüche, wobei die Gebläseeinheit (800) Luftmundstücke (820) aufweist, die in Gebläseförderbändern (830) installiert sind, die für Bewegungen entlang eines Bogenstapels (130) konfiguriert sind.

6. Stapelvorbereitungseinheit (PPU) (100) nach einem der vorhergehenden Ansprüche, wobei die Kantenseitenträgereinheit (600) ferner mit einer oder mehreren Vibrationseinheiten (890) konfiguriert ist, die zum Vibrieren der Kantenseitenträgerfläche (610) konfiguriert sind.

7. Stapelvorbereitungseinheit (PPU) (100) nach einem der vorhergehenden Ansprüche, wobei die Rotationseinheit (300) ferner einen Förderer (400) umfasst, der zum Transportieren einer Palette (140) mit einem Bogenstapel (130) von der Einspeiseseite (120) in der Förderrichtung (125) zu einer Stapelvorbereitungsposition (127) konfiguriert ist;

8. Stapelvorbereitungseinheit (PPU) (100) nach Anspruch 7, wobei die Bänder (310) den Förderer (400) umkreisen.

9. Verfahren (1000) zur Vorbereitung eines Bogenstapels (130) zur Verarbeitung, wobei der Bogenstapel (130) ein erstes Ende (131), das optional auf einer Palette (140) und gegenüber einem freien zweiten Ende (132) steht, eine Vorderkantenseite (133) und eine Seitenkantenseite (135) aufweist, wobei das Verfahren (1000) folgende Vorgänge umfasst:
- Vorbereiten (1100) einer Stapelvorbereitungseinheit (100) zum Empfang eines Bogenstapels (130) zum freien Transport zu einer Stapelvorbereitungsposition (127);
- Platzieren (1200) des Bogenstapels (130) in der Stapelvorbereitungsposition (127) mit der Seitenkantenseite (135) des Bogenstapels (130) in die Nähe einer Kantenseitenträgerfläche (610) der Kantenträgereinheit (600), wobei das Verfahren **dadurch gekennzeichnet ist, dass** es ferner folgende Vorgänge umfasst:
- Ineingriffnehmen (1300) einer Stapelträgerfläche (702) einer Stapelträgereinheit (700) an der Vorderkantenseite (133) des Bogenstapels (130);
- Rotieren (1400) des Bogenstapels (130) um etwa 90 Grad zur Kantenseitenträgerfläche (610) zum Tragen der Seitenkantenseite (135) des Bogenstapels (130); und nach Bedarf wiederholt:
- Neigen (1500) des Bogenstapels (130) gegen die Stapelträgerfläche (702);
- Blasen (1600) und optionales Vibrieren (1700) des Bogenstapels (130), wobei das Blasen (1600) von der Kantenseitenträgerfläche (610) in den Bogenstapel (130) erfolgt.

10. Verfahren (1000) nach Anspruch 9, wobei der Vorgang des Blasens (1600) während des Bewegens von Luftmundstücken (820) in "erstes Ende"-"zweites Ende"-Richtungen ("Top-Down"-Richtungen) des Bogenstapels (130) durchgeführt wird.

11. Verfahren (1000) nach Anspruch 9 oder 10, wobei es einen oder mehrere Vorgänge des Folgenden gibt:
- Speichern aller zuvor durchgeführten Sätze von Vorgängen
- Bearbeiten aller zuvor durchgeführten Sätze von Vorgängen
- Abrufen aller zuvor durchgeführten Sätze von Vorgängen; und
- Ausführen aller zuvor durchgeführten Sätze von Vorgängen.

## Revendications

1. Unité de préparation de pile (PPU) (100) pour préparer une pile de feuilles (130) ayant une première extrémité (131) éventuellement à la verticale sur une palette (140) et opposée à une seconde extrémité libre (132), un côté bord avant (133) et un côté bord latéral (135), l'unité de préparation de pile (100) comprenant :
- une base de rotation (200) configurée pour tenir à la verticale sur un plancher (150) et pour supporter
- une unité de rotation (300) configurée avec un côté alimentation (120) pour recevoir une pile de feuilles (130) dans une direction d'alimentation (125), l'unité de rotation (300) ayant un cadre d'unité de rotation (302) avec une section transversale de cadre d'unité de rotation (304), l'unité de rotation (300) étant configurée pour mettre en rotation autour de la direction d'alimentation (125) :
- une unité de support côté bord (600) configurée avec une face de support côté bord (610) pour supporter un côté bord de la pile de feuilles (130) lorsque la pile de feuilles (130) se trouve en une position tournée pour reposer sur la face de support côté bord (610) ; l'unité de préparation de pile étant **caractérisée en ce qu'**elle comprend en outre
- une unité de levage (500) configurée pour mettre en prise un plateau de levage (540) avec la seconde extrémité libre (132) de la pile de feuilles (130) dans la position de préparation de pile (127) et pour lever une pile de feuilles (130) et
**en ce que**
l'unité de support côté bord (600) est en outre configurée avec une unité de support de pile (700) configurée avec une face de support de pile (702) pour venir en prise avec et supporter le côté bord avant (133) de la pile de feuilles (130).

2. Unité de préparation de pile (PPU) (100) selon la revendication 1, dans laquelle le cadre d'unité de rotation (302) comprend deux guides (306) décalés dans la direction d'alimentation (125) l'un par rapport à l'autre et chacun fixé à la base de rotation (200) et guidant une bande (310) entraînée par un système d'entraînement d'unité de rotation (350) dans la base de rotation (200).

3. Unité de préparation de pile (PPU) (100) selon une quelconque revendication précédente, dans laquelle l'unité de support côté bord (600) est agencée de manière pivotante pour incliner l'unité de support côté bord (600) lorsqu'elle est tournée d'environ 90 degrés.

4. Unité de préparation de pile (PPU) (100) selon une quelconque revendication précédente, dans laquelle l'unité de support côté bord (600) est en outre configurée avec une unité soufflante (800) configurée pour souffler vers le côté bord de la pile de feuilles (130) depuis la face de support côté bord (610).

5. Unité de préparation de pile (PPU) (100) selon une quelconque revendication précédente, dans laquelle l'unité soufflante (800) présente des embouts à air (820) installés dans des bandes transporteuses à soufflante (830) configurées pour des déplacements le long d'une pile de feuilles (130).

6. Unité de préparation de pile (PPU) (100) selon une quelconque revendication précédente, dans laquelle l'unité de support côté bord (600) est en outre configurée avec une ou plusieurs unités de vibration (890) configurées pour faire vibrer la face de support côté bord (610).

7. Unité de préparation de pile (PPU) (100) selon une quelconque revendication précédente, dans laquelle l'unité de rotation (300) comprenant en outre un transporteur (400) configuré pour transporter une palette (140) avec une pile de feuilles (130) d'un côté alimentation (120) dans la direction d'alimentation (125) à une position de préparation de pile (127) ;

8. Unité de préparation de pile (PPU) (100) selon la revendication 7, dans laquelle les bandes (310) encerclent le transporteur (400).

9. Procédé (1000) de préparation d'une pile de feuilles (130) en vue d'un traitement, la pile de feuilles (130) présentant une première extrémité (131) éventuellement à la verticale sur une palette (140) et opposée à une seconde extrémité libre (132), un côté bord avant (133) et un côté bord latéral (135), le procédé (1000) comprenant les actions de :
- préparation (1100) d'une unité de préparation de pile (100) pour recevoir une pile de feuilles (130) pour le transport libre vers une position de préparation de pile (127) ;
- placement (1200) de la pile de feuilles (130) à la position de préparation de pile (127) avec le côté bord latéral (135) de la pile de feuilles (130) à proximité d'une face de support côté bord (610) de l'unité de support de bord (600)
le procédé étant **caractérisé en ce qu'**il comprend en outre les actions de :
- mise en prise (1300) d'une face de support de pile (702) d'une unité de support de pile (700) sur le côté bord avant (133) de la pile de feuilles (130) ;
- rotation (1400) de la pile de feuilles (130) d'environ 90 degrés pour que la face de support côté bord (610) supporte le côté bord latéral (135) de la pile de feuilles (130) ; et à plusieurs reprises si nécessaire :
- inclinaison (1500) de la pile de feuilles (130) contre la face de support de pile (702) ;
- soufflage (1600) et la vibration éventuelle (1700) de la pile de feuilles (130), où le soufflage (1600) a lieu vers la pile de feuilles (130) depuis la face de support côté bord (610).

10. Procédé (1000) selon la revendication 9, dans lequel l'action de soufflage (1600) est réalisée en même temps que le déplacement des embouts à air (820) dans des directions « première extrémité »-« seconde extrémité » (directions « de haut en bas ») de la pile de feuilles (130).

11. Procédé (1000) selon la revendication 9 ou 10, dans lequel il y a une ou plusieurs actions de :
- stockage de tout ensemble d'actions précédemment réalisées
- modification de tout ensemble d'actions précédemment réalisées
- récupération de tout ensemble d'actions précédemment réalisées ; et
- exécution de tout ensemble d'actions précédemment réalisées.
